# EUROPEAN PATENT APPLICATION

(11) **EP 3 476 812 A1**
(43) Date of publication of application: **01.05.2019**
(21) Application number: 18165232.2
(22) Date of filing: 29.03.2018
(51) Int. Cl.: C04B 18/02

(54) **THE PROCESS OF PRODUCTION OF THE AGGREGATE FOR CONCRETE AND MORTAR**

(30) Priority: 25.10.2017 SK 500652017
(71) Applicant: Povazská cementáren, a.s., 01863 Ladce (SK)
(72) Inventor: Martauz, Pavel, 911 01 Trencín (SK); Cvopa, Branislav, 018 63 Ladce (SK); Habánková, Helena, 018 63 Ladce (SK); Srámeková, Silvia, 018 63 Ladce (SK); Martauzová, Katarína, 911 01 Trencín (SK); Gach, Ferdinand, 018 63 Ladce (SK); Tiso, Ivan, 018 51 Nová Dubnica - Velký Kolacín (SK)
(74) Representative: Kubinyi, Peter

(57) **Abstract**

The process of production of the aggregate for concrete and mortar, wherein materials having cementitious properties, being raw materials, industrial byproducts or wastes, or recycled materials are processed in cold process to common concrete or mortar aggregate fractions, or clay, marl, or materials having cementitious properties or their mixture are processed in hot process comprising burning, to common concrete or mortar aggregate fractions. The aggregate such produced influences interfacial transition zone, for concrete and mortar with increased durability.

## Description

### Technical Field

Present invention relates to the process of production of the aggregate for concrete and mortar.

### Background Art

At present, the concrete is the most commonly used building material. It, however, possesses serious problem with regard to durability. Low durability of the concrete is caused mainly by cracks resulting from volume changes (shrinkage), low flexural strength under load at the so called interfacial transition zone (ITZ) between the aggregate and cement paste, degradation and biodegradation by biochemical substances entering with water or vapours into the concrete structure through cracks, thus further causing corrosion of steel reinforcement.

Aggregate composes approx. ¾ of volume of a concrete mixture, along with cement, water, mineral additions and chemical admixtures. The most common aggregate for the concrete is gravel or crushed stone. Gravel or crushed stone cannot react with cement, so interfacial transition zone between the aggregate and cement paste decreases over time so does the quality of the concrete. The interfacial transition zone is thus considered the weakest zone of a concrete.

There are lot of various lightweight aggregates, and polymers such as expanded clay, shale, perlite, foam glass and superabsorbent polymers, which have greater water absorption and are used as reservoirs for internal curing to reduce cracks in the concrete, but mostly with decrease of concrete strength.

### Summary of invention

The process of production of the aggregate for concrete and mortar, wherein materials having cementitious properties, being raw materials, industrial byproducts or wastes, or recycled materials are processed in cold process to common concrete or mortar aggregate fractions, or clay, marl, shale, perlite, tuff or materials having cementitious properties or their mixture are processed in hot process comprising burning, to common concrete or mortar aggregate fractions. The aggregate such produced influences interfacial transition zone, for concrete and mortar with increased durability.

The technical problem that is solved by this invention is production of artificial, chemically active aggregate with cementitious characteristics. Cementitious activity is defined as ability to react mainly with Ca(OH)₂, and serves as indication of binding properties. The cementitious aggregate should not be inert in concrete. In contact with water, Ca(OH)₂ and alkalies and internal moisture the aggregate should cause a chemical reaction in order to obtain strong bond between aggregate and cement paste, i.e. at the interfacial transition zone (ITZ). The aggregate must have suitable mechanical properties, especially, compressive strength and water absorption, between 0,5% and 15% to control rheology of concrete and its internal curing.

Thus, finished dry mixtures can be produced, which are composed of chemically active aggregate produced by the process according to this invention, cement and additives to modify the characteristics of the concrete in terms of bulk density, resistance to low temperature and workability. The strength and durability of the concrete will go by the principle: as concrete is ageing, it will have greater strength and greater resistance and durability. The strength of the concrete prepared with the aggregate according to this invention will increase over time up to 300% compared to the 28-day strength.

According to the first aspect of the invention, materials having cementitious properties, being raw materials, industrial byproducts or wastes, or recycled materials, with moisture content between 0,5% to 15% are crushed and/or sieved to fractions 0 to 4 mm; 4 to 8 mm; 8 to 16 mm; 16 to 32 mm; these fractions are generally within the industry labelled as 0/4, 4/8, 8/16, 16/32.

According to the second aspect of the invention materials having cementitious properties, being raw materials, industrial byproducts or wastes, or recycled materials, with moisture content between 0,5% to 15% or said materials are crushed, and/or sieved, and/or milled, and/or mixed to raw meal with particles size up to 2 mm, raw meal is then agglomerated to separate bodies with size up to 50 mm, thus obtained aggregate is then crushed and/or sieved and/or milled to fractions 0/4; 4/8; 8/16; 16/32.

According to the third aspect of the invention, clay, and/or marl, and/or materials having cementitious properties are crushed, and/or sieved, and/or milled, and/or mixed to raw meal with particles size up to 2 mm, raw meal is then agglomerated to separate bodies with size up to 50 mm, and subsequently burnt at the temperature up to 1300°C, thus obtained aggregate is then crushed and/or sieved and/or milled to fractions 0/4; 4/8; 8/1; 16/32.

The agglomeration of the raw meal can be agglomeration under pressure, which can involve compacting in roller press, such as granulating roller press, briquetting roller press or pelleting press. The agglomeration of the raw meal can also be non-pressure agglomeration which can involve steps of mixing and granulation of the raw meal.

Cementitious materials are materials which possess pozzolanic, latent hydraulic or hydraulic properties, i.e. cementitious materials are chosen from group: pozzolans, latent hydraulic materials, hydraulic materials and their mixtures.

Suitable pozzolans can include burnt clay, fly ash, bricks, recycled bricks, recycled construction and demolition waste, brick dust or their mixtures, suitable latent hydraulic materials can include air cooled slag, granulated blast furnace slag or their mixtures, hydraulic material can include clinker, fines from recycled concrete or their mixtures.

Preferred raw materials for the production of chemically active materials are aggregates with chemical composition, which are composed of oxides like: SiO₂; CaO; Al₂O₃ and Fe₂O₃. Clay is preferred material for chemically active aggregate because in addition to its composition, clay has a plasticity that enables plastic molding and good compaction pressures which can be several hundreds MPa. Other materials can be added to clay, which can be by-products, composed from oxides like: SO₂; CaO; Al₂O₃ and Fe₂O₃. Preferred additives to clay are fly ash and air cooled slag. These materials are mixed with the addition of water.

Product produced by the process according to this invention is chemically active dense or porous aggregate.

Such chemically active aggregate mixed with cements provide dry mixtures that can be used for producing concrete and mortars with extra high strength and durability.

Concrete made with this aggregate should have controlled shrinkage and sufficient resistance at low temperatures. As the aggregate contains alkalies, such as K₂O and Na₂O, which are very important for chemical processes in the contact zone, respectively interfacial transition zone, between cement paste and the aggregate particles.

### Brief description of drawings

The invention is also explained on drawings wherein
Fig. 1 - shows block diagram of the process according to the invention comprising wet or dry processing of raw materials to compacted granules for burning;
Fig. 2 - shows block diagram of the process according to the invention comprising dry compacting of the raw meal to granules for burning;
Fig. 3 - shows block diagram of the process according to the invention comprising cold compacting of the raw meal to granules.

### Description of embodiments

Raw material for the production of chemically active aggregate is material with mineral compositions, such as SiO₂; CaO; Al₂O₃; Fe₂O₃. The most preferred material with said mineral composition is clay, whereas the clay also has plasticity which enables the plastic molding and compaction at pressures between 10 MPa and 1200 MPa. Industrial by products composed of said oxides, can be added to the clay, such as fly ash in amount up to 70% by volume, air cooled slag in amount up to 70% by volume, and tuff in amount up to 50% by volume, or their mixtures.

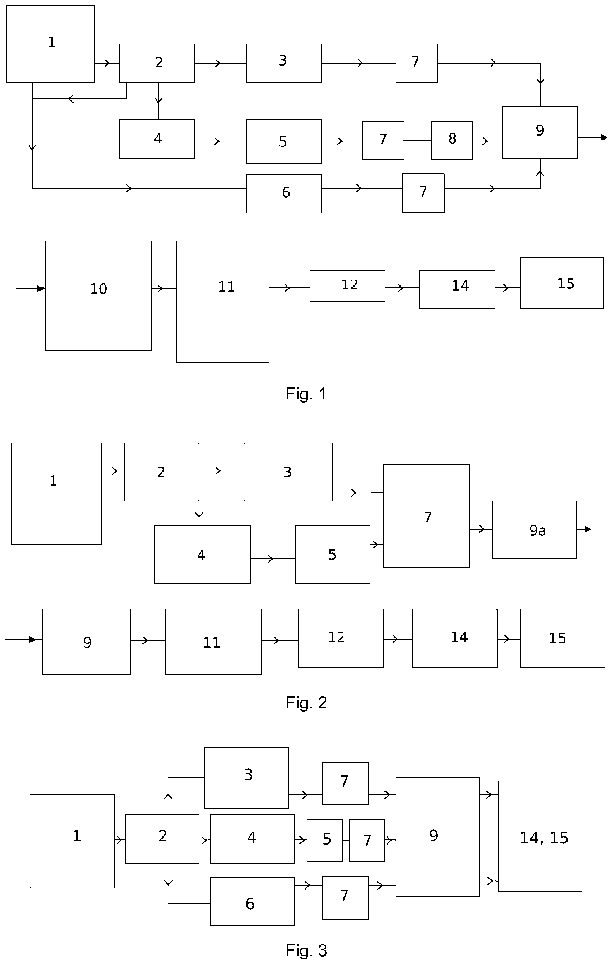

The process of production of the aggregate for concrete and mortar according to present invention comprising the step of burning, which may be described as "hot process" is schematically shown in Fig. 1 and Fig. 2. The processes of Fig. 1 and Fig. 2 show examples of different preparation of granules for burning.

Example of the process according to block diagram of Fig. 1 comprises following steps for processing of raw mineral composition 1 to the aggregate:
- crushing 2 and drying and grinding 3 of the raw mineral composition 1 to obtain the raw meal 7, or
- crushing 2, drying 4 and dry grinding 5 of the raw mineral composition 1 to obtain the raw meal 7 followed by moisturizing 8 of the raw meal 7, or
- crushing 2 and wet grinding 6 of the raw mineral composition 1 to obtain the raw meal 7, or
- wet grinding 6 of the raw mineral composition 1 to obtain the raw meal 7,
- compacting 9, in this example cold compacting, by extruding or pressing of the raw meal 7 prepared in previous steps 2, 3, 4, 5, 6 to form granules of compacted mineral composition,
- drying 10 of compacted mineral composition granules,
- burning 11 of the granules,
- cooling 12 of the granules,
- crushing 14 of the granules,
- sieving 15 of the granules, i.e. separating the fractions of the aggregate.

Steps 2, 3, 4, 5, 6 of processing the raw mineral composition 1 to obtain raw meal 7 are chosen according to properties of entering raw materials, their particles size and moisture content.

Example of the process according to block diagram of Fig. 2 comprises following steps for processing of raw mineral composition 1 to the aggregate:
- crushing 2 and drying and grinding 3 of the raw mineral composition 1, or
- crushing 2, drying 4 and dry grinding 5 of the raw mineral composition 1, to obtain the raw meal 7,
- preheating 9a of the raw meal 6, preferably in the kiln preheater
- compacting 9, in this example hot compacting, by pressing in the roller press of the raw meal 7 prepared in previous steps 2, 3, 4, 5, to form briquettes of compacted mineral composition,
- burning 11 of the granules in rotary kiln up to 1300 °C,
- cooling 12 of the granules,
- crushing 14 of the granules,
- sieving 15 of the granules, i.e. separating the fractions of the aggregate.

Another example of process of production of the aggregate for concrete and mortar according to present invention carried optionally without the step of burning, which may be described as "cold process" is schematically shown in Fig. 3. This cold process is utilized when materials such as industrial by-products, wastes, or recycled materials are used, which does not require burning, as the step of burning was already present during the industrial or manufacturing process. Example of the process according to block diagram of Fig. 3 comprises following steps for processing of raw mineral composition 1 to the aggregate:
- crushing 2 and drying and grinding 3 of the raw mineral composition 1 to obtain the raw meal 7, or
- crushing 2, drying 4 and dry grinding 5 of the raw mineral composition 1 to obtain the raw meal 7 or
- crushing 2 and wet grinding 6 of the raw mineral composition 1 to obtain the raw meal 7,
- compacting 9, in this example cold compacting, e.g. by extruding or pressing of the raw meal 7 prepared in previous steps 2, 3, 4, 5, 6 to form granules of compacted mineral composition,
- crushing 14 of the granules,
- sieving 15 of the granules, i.e. separating the fractions of the aggregate.

In one embodiment, required components for producing chemically active aggregate are transported to mills, where the composition 1 is mixed and milled (crushed, ground) to particle size less than 2 mm. Obtained powder, the raw meal 7 is mixed with water or steam to humidity up to 20%. If the composition 1 has higher moisture content it is suitably adjusted, e.g. by drying. Then, granules are formed from the raw meal 7.

Forming of granules can be carried out in roller press Pressures that are applied during the compaction of materials using roller presses range from 10 MPa to 1200 MPa. Also, other types of roller press can be used, such as granulating roller press, briquetting roller press, or pelleting press.

The raw meal 7 can be shaped to granules also using disc-granulator. Using disc-granulator spherical granules with diameter preferably up to 50 mm can be produced.

Such produced chemically active aggregate can be used in several ways. It can be used without any other additives. Another way is to mix chemically active aggregate with cement, and optionally with other additives to produce concrete.

Such concrete mixture can be used for producing concrete, with high strength from 80 up to 220 MPa and high durability.

A mixture of chemically active aggregate with fractions 0 to 4mm and stone aggregate can be used for production of composite ordinary concrete with improved physical and mechanical properties and durability in aggressive chemical environments.

In one embodiment, chemically active aggregate is produced in process, shown in Fig. 3. Fly ash, air cooled slag, granulated blast furnace slag, tuff, milled (crushed or ground) burned clay, crushed / sieved construction and demolition waste can be used for this production. Said components can be each separately or in mixture in amount up to 70% by volume and particle size is preferably less than 4 mm.

### Industrial applicability

Chemically active aggregate can be used in several ways. The first way is that the chemically active aggregate is sold without other additives, i.e. as a separate product. Another way of application is to blend chemically active aggregate with cement and thus obtain a dry mix for producing concrete with extra high strengths from 120 MPa to 250 MPa and great durability. Mixing chemically active aggregate or fraction less than 4 mm with gravel or stone aggregates and water provides composite ready-mix concrete with improved physical and mechanical properties and durability in chemically aggressive environments.

## Claims

1. A process of production of aggregate for concrete and mortar, **characterized in that,** materials having cementitious properties, being raw materials, industrial byproducts or wastes, or recycled materials, with moisture content between 0,5% to 15% are crushed and/or sieved and/or milled to fractions 0/4; 4/8; 8/16; 16/32.

2. A process of production of aggregate for concrete and mortar, **characterized in that,** materials having cementitious properties, being raw materials, industrial byproducts or wastes, or recycled materials, with moisture content between 0,5% to 15% or said materials are sieved, and/or crushed, and/or milled, and/or mixed to raw meal with particles size up to 2 mm, raw meal is then agglomerated to separate bodies with size up to 50 mm, thus obtained aggregate is then sieved and/or crushed and/or milled to fractions 0/4; 4/8; 8/16; 16/32.

3. A process of production of aggregate for concrete and mortar, **characterized in that,** clay, and/or marl, and/or materials having cementitious properties are sieved, and/or crushed, and/or milled, and/or mixed to raw meal with particles size up to 2 mm, raw meal is then agglomerated to separate bodies with size up to 50 mm, and subsequently burnt at the temperature up to 1300°C, thus obtained aggregate is then crushed and/or sieved and/or milled to fractions 0/4; 4/8; 8/16; 16/32.

4. The process of production of the aggregate for concrete and mortar according to claim 1, 2 or 3, **characterized in that,** the agglomeration of the raw meal is agglomeration under pressure.

5. The process of production of the aggregate for concrete and mortar according to claim 1, 2 or 3, **characterized in that,** the pressure agglomeration is compacting in roller press, granulating, roller press, briquetting roller press or pelleting press.

6. The process of production of the aggregate for concrete and mortar according to claim 1, 2, or 3, **characterized in that,** the agglomeration of the raw meal is non-pressure agglomeration.

7. The process of production of the aggregate for concrete and mortar according to claim 6, **characterized in that,** the non-pressure agglomeration comprises steps of mixing and granulation of the raw meal.

8. The process of production of aggregate for concrete and mortar according to claim 3 to 7, **characterized in that,** the separate bodies of agglomerated raw meal are preheated and dried at the temperature up to 200 °C before burning.

9. The process of production according to claims 1 to 8, **characterized in that,** cementitious materials are chosen from group: pozzolans, latent hydraulic materials, hydraulic materials and their mixtures.

10. The process of production according to claim 9, **characterized in that,** pozzolans are chosen from group: burnt clay, fly ash, bricks, recycled bricks, recycled construction and demolition waste, brick dust, latent hydraulic materials are chosen from group: air cooled slag, granulated blast furnace slag, hydraulic material is clinker, fines from recycled concrete and their mixtures.
